# EUROPÄISCHE PATENTSCHRIFT

(11) **EP 2 649 711 B1**
(45) Veröffentlichungstag und Bekanntmachung des Hinweises auf die Patenterteilung: **21.07.2021**
(21) Anmeldenummer: 11799365.9
(22) Anmeldetag: 05.12.2011
(51) Int. Cl.: H02K 16/00

(54) **GETRIEBEMOTOR**
GEARED MOTOR
MOTORÉDUCTEUR

(30) Priorität: 09.12.2010 DE 102010054027
(43) Veröffentlichungstag der Anmeldung: 16.10.2013
(73) Patentinhaber: SEW-EURODRIVE GmbH & Co. KG, 76646 Bruchsal (DE)
(72) Erfinder: BARTON, Peter, 75015 Bretten (DE); DIETRICH, Stefan, 76149 Karlsruhe (DE); DITTES, Gerhard, 75053 Gondelsheim (DE); DOPPELBAUER, Martin, 75015 Bretten (DE); HAUCK, Matthias, 68723 Schwetzingen (DE); HAUG, Michael, 75015 Bretten (DE); KOKER, Torsten, 76297 Stutensee (DE); LEWANDOWSKI, Marek, 71272 Renningen (DE); METZLER, Friedhelm, 76669 Bad Schönborn (DE); SCHMIDT, Josef, 76676 Graben-Neudorf (DE); SCHÜTTERLE, Ingo, 72488 Sigmaringen (DE); ZUCKER, Mario, 76646 Bruchsal (DE)
(74) Vertreter: Tüngler, Eberhard
(86) Internationale Anmeldenummer: PCT/EP2011/006077
(87) Internationale Veröffentlichungsnummer: WO 2012/076141

(56) Entgegenhaltungen:
- EP-A1- 1 319 866
- EP-A2- 0 990 820
- US-A1- 2008 238 098

## Beschreibung

Die Erfindung betrifft einen Getriebemotor.

Aus der EP 1 319 866 B1 ist ein Getriebemotor bekannt mit einem einzigen Motorgehäuse und mehreren in Motoraufnahmen angeordneten Elektromotoren. Dabei wird ein Kühlmedium zwischen den Elektromotoren vorgesehen, wodurch die Elektromotoren von außen nicht sichtbar angeordnet sind.

Aus der DE 4402337 A1 ist ein Antriebssystem bekannt, das mehrere Elektromotoren aufweist, die in einem Motorlagerblock angeordnet sind.

US 2008/0238098 offenbart: Getriebemotor, aufweisend Elektromotoren und ein Getriebe sowie einen Adapter, welcher zwischen den Elektromotoren und dem Getriebe angeordnet ist, wobei das Getriebe eine Eintriebswelle und eine Abtriebswelle aufweist, wobei jeder Motor eine Rotorwelle aufweist, wobei der Adapter einen gehäusebildenden Adapterflansch aufweist, wobei der Adapterflansch ein Summierungsgetriebe zur Zusammenführung der von den Motoren erzeugten Leistungsströme auf die Eintriebswelle des Getriebes zumindest teilweise gehäusebildend umgibt, wobei die Motoren jeweils von einem Öl als Kühlmedium durchströmbar sind, also flüssigkeitsgekühlt sind, wobei die Motoren jeweils einen Einlass sowie einen Auslass für das Kühlmedium aufweisen, wobei am Adapterflansch Kanäle ausgebildet sind, welche das am jeweiligen Auslass eines Motors austretende Kühlmedium zusammenführen, wobei die Eintriebswelle des Getriebes in einem Gehäuseteil des Getriebes, insbesondere Lagertopf, gelagert ist, wobei der Adapterflansch ein Zentriermittel aufweist, wobei am Adapterflansch Aufnahmen zur Aufnahme der Lagerschilde der Elektromotoren angeordnet ist, wobei die jeweilige Aufnahme ein Zentriermittel, insbesondere Zentrierbund, aufweist, an dem das Lagerschild eines jeweiligen Motors ausgerichtet ist, wobei das Summierungsgetriebe mit Kühlflüssigkeit geschmiert ist.

**Aus der** EP 1 319 866 A1 **ist ein Getriebemotor bekannt.**

**Aus der** EP 0 990 820 A2 **ist eine Motorgetriebeeinheit mit gemeinsamer Kühlung bekannt.**

Der Erfindung liegt daher die Aufgabe zugrunde, ein Antriebssystem weiterzubilden, wobei der Umweltschutz verbessert sein soll.

Erfindungsgemäß wird die Aufgabe bei dem Getriebemotor nach den in Anspruch 1 angegebenen Merkmalen gelöst.

**Wichtige Merkmale der Erfindung bei dem Getriebemotor sind die Merkmale des Anspruch 1.**

Von Vorteil ist dabei, dass ein modulartiger Aufbau ausgeführt ist, bei dem jeder Motor einzeln schnell und einfach austauschbar ist, ohne dass das gesamte Kühlmedium zuvor abgelassen werden muss. Denn ein Motor ist einfach austauschbar, da er frei zugänglich von der B-Seite her ist. Er muss also nur vom Adapterflansch gelöst und dann ausgetauscht werden. Außerdem sind die Motoren von außen sichtbar angeordnet. Somit sind Schäden, wie beispielsweise Korrosionsschäden schnell und einfach erkennbar. Außerdem ist die abgegebene Leistung der Motoren mittels der gewählten Anzahl der Motoren schnell und einfach an die Anforderung anpassbar.

**Bevorzugt** sitzen die jeweiligen Ritzel auf der jeweiligen Motorwelle und benötigen keine eigene Lagerung.

Zuflüsse und Abflüsse sind **bevorzugt** auf unterschiedlichen Seiten der Motoren angeordnet. Die Leistung der einzelnen Motoren ist mittels des Summierungsgetriebes summierbar.

**Erfindungsgemäß** ist die Eintriebswelle des Getriebes in einem Gehäuseteil des Getriebes, insbesondere Lagertopf, gelagert,
insbesondere wobei das Gehäuseteil an einem weiteren Gehäuseteil des Getriebes mittels eines Zentrierbundes ausgerichtet und verbunden ist. Von Vorteil ist dabei, dass das Zentralrad zusammen mit dem eintreibenden Ritzel des Getriebes, also dem ersten Verzahnteil der ersten Getriebestufe des Getriebes, gemeinsam gelagert ist. Somit muss kein zusätzliches Lager für das Zentralrad eingesetzt werden. Außerdem ist ein vorhandenes Getriebe in einfacher Weise veränderbar für Zwecke der Erfindung, bei der ein mehrmotoriger Antrieb eingesetzt wird. Somit ist nur ein geringer Aufwand an Abänderung notwendig. Insbesondere ist zwischen Motor und Getriebe ein sowieso notwendiger Adapter umrüstbar und mit den erfindungsgemäßen Funktionen, also dem Summierungsgetriebe, der Gehäusebildung für das Summierungsgetriebe, der Vermittlung der Zentrierung zwischen Getriebe und Motoren sowie der Zusammenführung des Kühlmediums, ausstattbar.

**Erfindungsgemäß** ist das Summierungsgetriebe mit Kühlflüssigkeit geschmiert, indem eine durchgehende Öffnung, insbesondere ein Verbindungskanal, vom Raumbereich des Summierungsgetriebes **zum Auslass** des Adapterflansches führt. Von Vorteil ist dabei, dass eine Schmierung in einfacher Weise ausführbar ist und somit kein großer Aufwand hierfür notwendig ist, **weil Öl als Kühlmedium benutzt wird.**

Bei einer vorteilhaften Ausgestaltung weist das Summierungsgetriebe ein Zentralrad, insbesondere Verzahnungsteil, insbesondere Stirnrad, auf, welches auf der Eintriebswelle des Getriebes drehfest angeordnet ist,
wobei an jeder Rotorwelle eine Verzahnung ausgebildet ist oder mit jeder Rotorwelle ein Verzahnteil, insbesondere Ritzel, mit Verzahnung drehfest mit der Rotorwelle verbunden ist,
wobei die Ritzel mit dem Zentralrad im Eingriff sind. Von Vorteil ist dabei, dass das Summierungsgetriebe keine eigene Lagerung benötigt sondern alle drehbar angeordneten Teile des Summierungsgetriebes die sowieso notwendige Lagerung der Motorwellen oder der Eintriebswelle mitnutzen.

Bei einer vorteilhaften Ausgestaltung ist der Adapterflansch gehäusebildend für das Summierungsgetriebe. Von Vorteil ist dabei, dass im Adapter zwischen Getriebe und Motor ein Summiergetriebe integrierbar ist und dieses ohne Lagerung aber mit Gehäusefunktion umgebbar ist. Somit ist sogar bei entsprechend dichter Ausführung ein Schmierstoff im Summierungsgetriebe vorsehbar. Dabei fungiert der Adapterflansch als Gehäuseteil für das Summierungsgetriebe.

Bei einer vorteilhaften Ausgestaltung ist der Adapterflansch zweistückig aufgebaut, so dass er ein Blech aufweist, an welchem die Kanäle als Vertiefung, insbesondere als Nut, ausgebildet sind, insbesondere eingefräst sind. Von Vorteil ist dabei, dass im Adapterflansch Kanäle zur Zusammenführung des Kühlmediums vorsehbar sind, insbesondere in einfacher und kostengünstiger Weise.

Bei einer vorteilhaften Ausgestaltung ist der Auslass der Motoren jeweils dicht mit einem am Adapterflansch ausgebildeten Einlass zu einem Kanal beziehungsweise mit einem von dem Blech des Adapterflansches ausgebildeten Einlass verbunden,
insbesondere wobei der Einlass die Mündung eines jeweiligen der Kanäle ist. Von Vorteil ist dabei, dass die aus den Motoren ausströmenden Kühlmediumströme in den Adapterflansch einleitbar sind und dort zusammenführbar.

Bei einer vorteilhaften Ausgestaltung sind die Motoren beziehungsweise die auf den Rotorwellen der Motoren angeordneten Ritzelverzahnungen in Umfangsrichtung der Getriebeeintriebswelle gleichmäßig voneinander beabstandet. Von Vorteil ist dabei, dass eine gleichmäßige Kraftverteilung erreichbar ist und somit keine wesentlichen Querkraftbelastungen entstehen, also die Belastung für die Lagerung gering bleibt. Außerdem ermöglicht diese Anordnung, dass das Zentralrad auch an den Ritzelverzahnungen am Umfang abgestützt ist und somit auch Schwingungen reduzierbar sind.

Bei einer vorteilhaften Ausgestaltung ist ein auf der Rotorwelle eines Motors drehfest verbundenes Ritzel nur über die beiden Lager der Rotorwelle gelagert. Von Vorteil ist dabei, dass keine zusätzliche Lagerung notwendig ist.

Bei einer vorteilhaften Ausgestaltung ist das Zentralrad mit der Getriebeeintriebswelle in einem Gehäuseteil, insbesondere Lagertopf, des Getriebes gelagert. Von Vorteil ist dabei, dass keine zusätzliche Lagerung für das Zentralrad notwendig ist.

**Erfindungsgemäß** weist der Adapterflansch ein Zentriermittel auf, welches an einem Zentriermittel, insbesondere Zentrierbund, des Getriebegehäuseteils, insbesondere des Lagertopfes, ausrichtbar ist, insbesondere wobei Adapterflansch und Lagertopf lösbar verbunden sind, insbesondere schraubverbunden sind. Von Vorteil ist dabei, dass über den Adapterflansch die Motoren zum Getriebegehäuse hin ausrichtbar sind.

Bei einer vorteilhaften Ausgestaltung ist am Adapterflansch eine Aufnahme, insbesondere Aufnahmeöffnung, angeordnet, die ein Zentriermittel, insbesondere Zentrierbund, aufweist, an dem das Lagerschild eines Motors ausgerichtet ist. Von Vorteil ist dabei, dass eine Zentrierung in einfacher Weise erreichbar ist.

Bei einer vorteilhaften Ausgestaltung sind im Lagerschild Kühlkanäle des Statorgehäuses des Motors zusammengeführt an einen gemeinsamen Mündungsbereich als Auslass,
insbesondere wobei im anderen Lagerschild des Motors die Kühlkanäle des Statorgehäuses des Motors zusammengeführt sind zu einem gemeinsamen Mündungsbereich als Einlass für das Kühlmedium. Von Vorteil ist dabei, dass nur ein einziger Einlass beziehungsweise Auslass notwendig ist. Somit ist nur hierbei ein dichtes Verbindung erforderlich. Die sonstige Kanalstruktur ist innerhalb der Motorteile in einfacher Weise abdichtbar.

Weitere Vorteile ergeben sich aus den Unteransprüchen.

Die Erfindung wird nun anhand von schematischen Abbildungen näher erläutert:
In der Figur 1 ist ein erfindungsgemäßer Antrieb mit einem von vier Motoren angetriebenen Getriebe gezeigt, wobei die Drehmomente der vier Motoren über ein Summierungsgetriebe der Getriebeeingangswelle zugeführt werden.

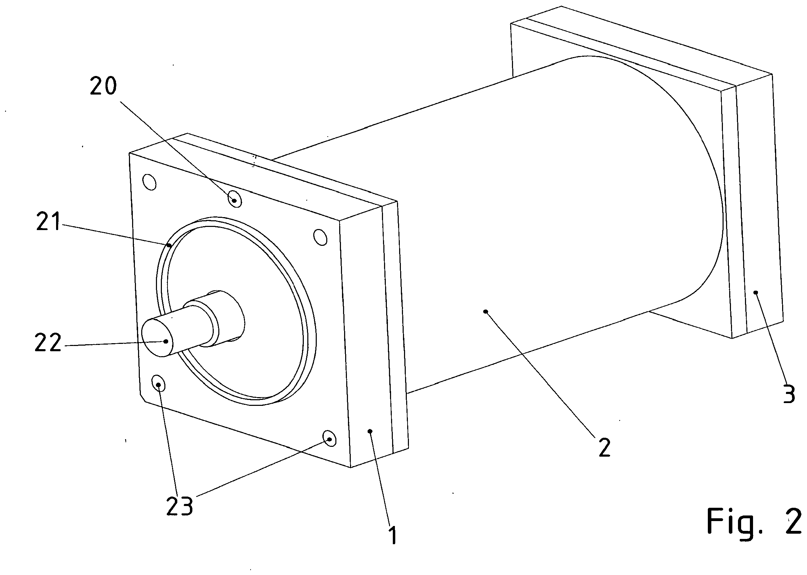

In der Figur 2 ist einer der Motoren in Schrägansicht gezeigt.

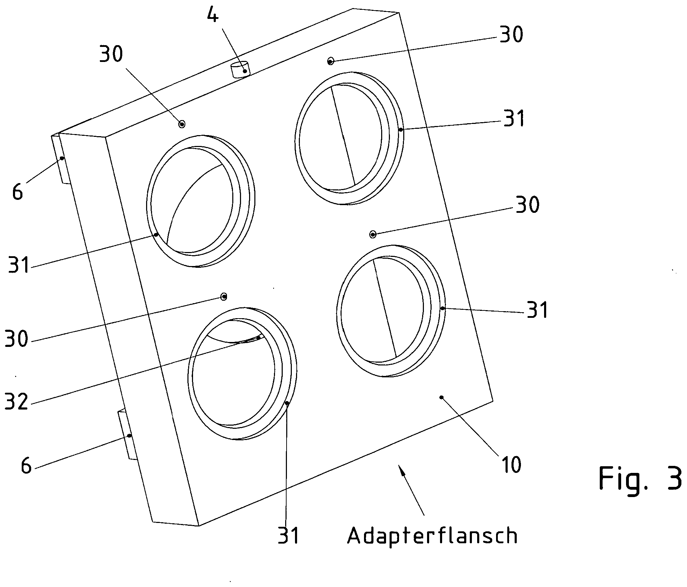

In der Figur 3 ist ein Adapterflansch 10 in Schrägansicht gezeigt.

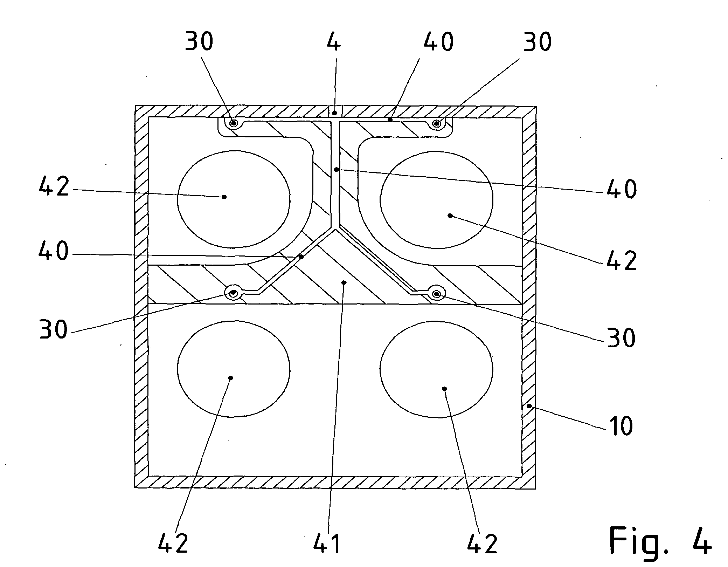

In der Figur 4 ist ein Blech am Adapterflansch 10 in Draufsicht gezeigt.

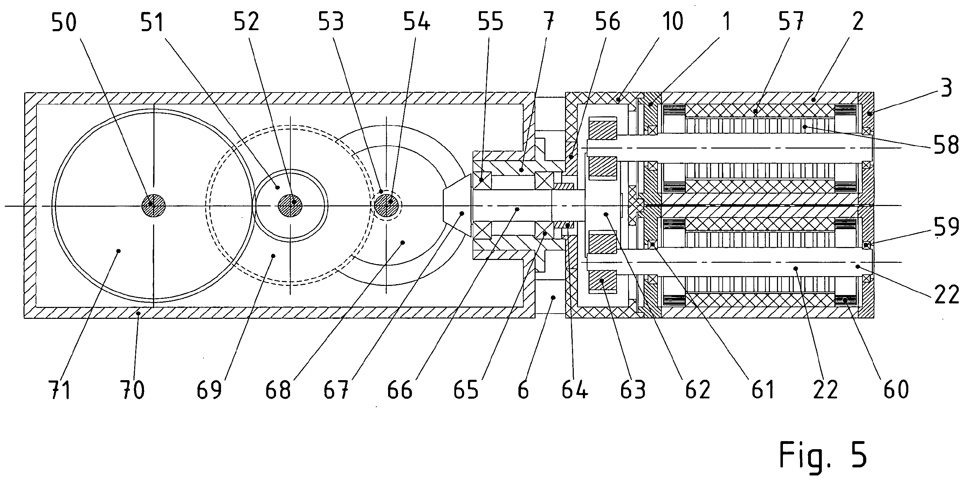

In der Figur 5 ist ein Querschnitt durch den Antrieb dargestellt.

Bei dem in den Figuren schematisch dargestellten Antrieb weist jeder Motor einen abtriebsseitigen A-Lagerschild 1 auf, in welchem ein Lager 61 für die Rotorwelle des Motors angeordnet ist, und ein am axial anderen Ende, also getriebeabgewandten Ende, also B-Lagerschild 3, auf, in welchem ein weiteres Lager 59 der Rotorwelle vorgesehen ist.

A-Lagerschild 1 und B-Lagerschild 3 sind mittels des Statorgehäuses 2 verbunden, welches den Stator 57 umfasst. Axial stehen aus dem Stator 57 die Umlenkbereiche der Statorwicklung, also Wickelköpfe 60, hervor.

Die Motorwelle 22 trägt das Rotorpaket 58, an deren axialem Endbereich das Ritzel 63 drehfest verbunden ist, insbesondere mittels Passfederverbindung.

Die Motoren sind gleichartig aufgebaut. Ihre Ritzel 63 sind im Eingriff mit dem Zentralrad 62, das drehfest mit der Eintriebswelle 66 des Getriebes verbunden ist, welche das eintreibende Ritzel 67 trägt. Dabei ist die Eintriebswelle 66 über Lager (55, 65) in einem Gehäuseteil des Getriebes, nämlich einem Lagertopf 7 gelagert, welcher mit dem Getriebegehäuse 70 verbunden ist. Mittels einer Wellenmutter 64 werden die Lager 55 und 65 vorgespannt. Im Getriebegehäuse 70 sind die Abtriebswelle 50 und die jeweils miteinander im Eingriff sich befindenden Verzahnungsteile, wie Ritzel 51, 53 und zugehörige Zahnräder sowie die Zwischenwellen 52, 54 gezeigt.

Am Lagertopf 7 ist ein Zentrierflansch 56 angeordnet, welcher mit einem Adapterflansch 10 verbunden ist, der das Summierungsgetriebe, aufweisend das Zentralrad 62 und die im Eingriff sich befindenden Ritzel 63, gehäusebildend zumindest teilweise umgibt.

Der Adapterflansch 10 weist Öffnungen 42 zur Aufnahme der Motoren, insbesondere zur Aufnahme der A-Lagerschilde 1 der Motoren auf. Hierbei ist auch an jedem Randbereich einer Öffnung 42 ein Zentrierbund 31 angeordnet, so dass die Motoren hieran ausrichtbar und zentrierbar sind. Auf diese Weise ist also ein hochgenaues Anordnen der Motoren ermöglicht. Dies ermöglicht somit auch, das aus einem Motor austretende Kühlmedium einem Einlass 30 im Adapterflansch zuzuführen.

Denn jeder Motor ist mittels des Kühlmediums entwärmbar, wobei das Kühlmedium durch einen Einlass 5 am B-Lagerschild 3 in Kanäle des jeweiligen Motors, welche im Statorgehäuse 2 angeordnet sind, einströmt und am anderen axialen Ende, also am A-Lagerschild 1 durch den Auslass 20 in den Einlass 30 des Adapterflansches einströmt.

Somit ist nun ein effektives Durchströmen und somit auch Entwärmen ermöglicht.

im Adapterflansch 10 wird das einströmende Kühlmedium durch Kanäle 40 zusammengeführt, welche in einem auf den restlichen Adapterflansch aufgeschweißten Blechteil eingefräst sind. Die zusammengeführten Kühlmediumströme sind dann durch den Auslass 4 herausführbar.

Der Adapterflansch 10 hat also einerseits die Funktion eines Gehäuseteils für das Summierungsgetriebe und andererseits die Funktion der Zusammenführung und Herausleitung des Kühlmediums der einzelnen Motoren. Außerdem verbindet er die Motoren mit dem Getriebegehäuse 70 und ermöglicht ein Ausrichten und Zentrieren der Motoren relativ zum Getriebe.

Das Getriebegehäuse 70 dient also mittels des Lagertopfes 7 zum Lagern des Zentralrades 62. Die Motoren dienen zum Lagern der Ritzel über die im Motorgehäuse gelagerte Motorwelle 22.

Somit übermittelt der Adapterflansch die Ausrichtung der Motoren zum Getriebegehäuse 70 mit zugehörigem Lagertopf 7.

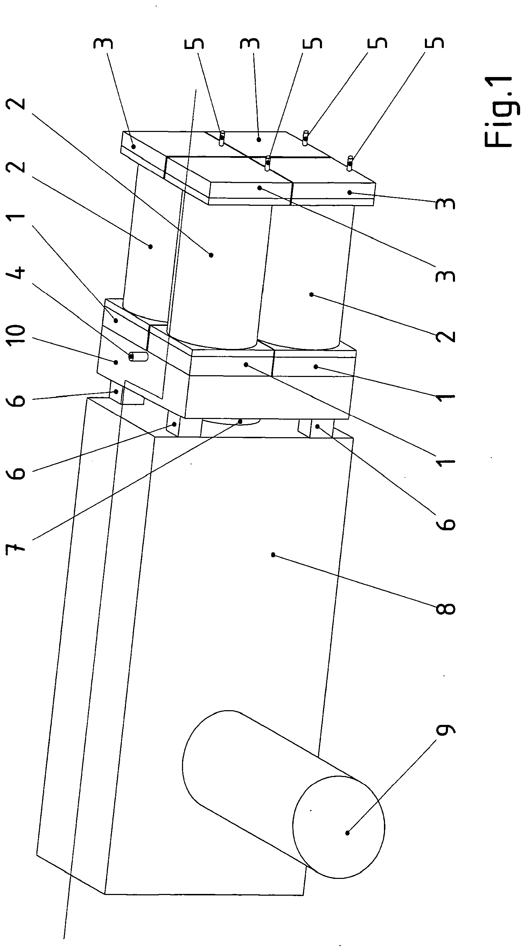

Wie in Figur 1 dargestellt, sind zwischen dem Adapterflansch 10 und dem Getriebegehäuse (8, 70) Abstandshalter 6 vorsehbar. Somit ist eine bessere Zugänglichkeit erreichbar, insbesondere zum Bereich des Lagertopfes 7. Außerdem ist eine Festlegung des Adapterflansches an wenigen Flächen ermöglicht, so dass nur wenig Bearbeitung am Getriebegehäuse (8, 70) notwendig ist.

Jeder der Motoren weist einen Einlass 5 für Kühlmedium auf. Alle Einlässe 5 sind aus einer gemeinsamen Kühlmediumsquelle speisbar. Am Auslass 4 wird das zusammengeführte Kühlmedium herausgeführt und vorzugsweise direkt oder über einen Kühler zur Kühlmediumsquelle geführt.

Der Auslass 20 für Kühlmedium ist bei jedem Motor mit einer Abdichtung dicht verbindbar mit dem Einlass 30 am Blech des Adapterflansches.

Mittels des am A-seitigen Lagerschild 1 angeordneten Zentrierbunds 31 ist ein genaues Ausrichten der Motoren am Zentrierbund 31 des Adapterflansches ermöglicht, so dass das auf der Motorwelle 22 drehfest verbundene Ritzel genau ausgerichtet ist zum Zentralrad 62.

Vorzugsweise weist das Statorgehäuse in Umfangsrichtung voneinander beabstandete, axial verlaufende, parallel zueinander ausgerichtete Kühlkanäle auf, wobei das durch die Kühlkanäle geführte Kühlmedium mittels einer im A-Lagerschild 1 angeordneten, in Umfangsrichtung umlaufenden Ringnut zusammengeführt wird und am Auslass 20 herausgeführt wird.

Dabei wird das Lageschild 1 mittels Schrauben, welche in den Befestigungsbohrungen 23 angeordnet sind, mit dem Statorgehäuse 2 verbunden.

Am Adapterflansch ist ein Zentriermittel 32 für Zentrierflansch angeordnet, mittels dessen der Adapterflansch 10 am Lagertopf 7 zentrierbar ist.

### Bezugszeichenliste

1 A-Lagerschild
2 Statorgehäuse
3 B-Lagerschild
4 Auslass für Kühlmedium
5 Einlass für Kühlmedium
6 Abstandshalter
7 Lagertopf
8 Getriebegehäuse
9 Abtriebswelle
10 Adapterflansch
20 Auslass für Kühlmedium
21 Zentrierbund
22 Motorwelle
23 Befestigungsbohrungen
30 Einlass für Kühlmedium
31 Zentrierbund
32 Zentriermittel für Zentrierflansch
40 Kanal
41 aufgeschweißtes Blech mit eingeschweißten Kanälen
42 Öffnung zur Aufnahme eines Motors
50 Welle
51 Ritzel
52 Welle
53 Ritzel
54 Welle
55 Lager
56 Zentrierflansch
57 Stator
58 Rotorpaket
59 Lager
60 Wickelkopf
61 Lager
62 Zentralrad
63 Ritzel
64 Wellenmutter
65 Lager
66 Welle
67 Ritzel
68 Zahnrad
69 Zahnrad
70 Getriebegehäuse
71 Zahnrad

## Patentansprüche

1. Getriebemotor, aufweisend Elektromotoren und ein Getriebe sowie einen Adapter, welcher zwischen den Elektromotoren und dem Getriebe angeordnet ist,
wobei das Getriebe eine Eintriebswelle (66) und eine Abtriebswelle (9) aufweist,
wobei jeder Motor eine Rotorwelle aufweist,
wobei der Adapter einen gehäusebildenden Adapterflansch (10) aufweist,
wobei der Adapterflansch (10) ein Summierungsgetriebe zur Zusammenführung der von den Motoren erzeugten Leistungsströme auf die Eintriebswelle des Getriebes zumindest teilweise gehäusebildend umgibt,
wobei die Motoren jeweils von einem **Öl als** Kühlmedium durchströmbar sind, **also flüssigkeitsgekühlt sind,**
wobei die Motoren **jeweils einen Einlass (5) sowie** einen Auslass (20) für das Kühlmedium aufweisen,
wobei am Adapterflansch (10) Kanäle (40)
ausgebildet sind, welche das am jeweiligen Auslass (20) eines Motors austretende Kühlmedium zusammenführen zu einem Auslass (4) am Adapterflansch (10),
**wobei die Eintriebswelle des Getriebes in einem Gehäuseteil des Getriebes, insbesondere Lagertopf (7), gelagert ist,**
**wobei der Adapterflansch (10) ein Zentriermittel (32) aufweist, welches an einem Zentriermittel (32), insbesondere Zentrierbund (21, 31), des Getriebegehäuseteils ausrichtbar ist,**
wobei am Adapterflansch (10) **Aufnahmeöffnungen (42) zur Aufnahme der Lagerschilde (1, 3) der Elektromotoren angeordnet** sind,
**wobei die jeweilige Aufnahme** ein Zentriermittel (32), insbesondere Zentrierbund (21, 31), aufweist, an dem das Lagerschild (1) eines **jeweiligen** Motors ausgerichtet ist,
**wobei das Summierungsgetriebe mit Kühlflüssigkeit geschmiert ist, indem ein Verbindungskanal** (40) **vom Raumbereich des Summierungsgetriebes** zu einem Kanal
**des Adapterflansches (10) führt.**

2. Getriebemotor nach Anspruch 1,
**dadurch gekennzeichnet, dass**
**das Gehäuseteil an einem weiteren Gehäuseteil des Getriebes mittels eines Zentrierbundes (21, 31) ausgerichtet und verbunden ist.**

3. Getriebemotor nach mindestens einem der vorangegangenen Ansprüche,
**dadurch gekennzeichnet, dass**
das Summierungsgetriebe ein Zentralrad (62), insbesondere Verzahnungsteil, insbesondere Stirnrad, aufweist, weiches auf der Eintriebswelle des Getriebes drehfest angeordnet ist,
wobei an jeder Rotorwelle eine Verzahnung ausgebildet ist oder mit jeder Rotorwelle ein Verzahnteil, insbesondere Ritzel, mit Verzahnung drehfest mit der Rotorwelle verbunden ist,
wobei die Ritzel mit dem Zentralrad (62) im Eingriff sind.

4. Getriebemotor nach mindestens einem der vorangegangenen Ansprüche,
**dadurch gekennzeichnet, dass**
der Adapterflansch (10) gehäusebildend für das Summierungsgetriebe ist.

5. Getriebemotor nach mindestens einem der vorangegangenen Ansprüche,
**dadurch gekennzeichnet, dass**
der Adapterflansch (10) zweistückig aufgebaut ist, so dass er ein Blech aufweist, an welchem die Kanäle als Vertiefung, insbesondere als Nut, ausgebildet sind, insbesondere eingefräst sind.

6. Getriebemotor nach Anspruch 5,
**dadurch gekennzeichnet, dass**
der Auslass (4, 20) der Motoren jeweils dicht mit einem am Adapterflansch (10) ausgebildeten Einlass (5, 30) zu einem Kanal (40) beziehungsweise mit einem von dem Blech des Adapterflansches (10) ausgebildeten Einlass (5, 30) verbunden ist,
insbesondere wobei der Einlass (5, 30) die Mündung eines jeweiligen der Kanäle ist.

7. Getriebemotor nach Anspruch 3,
**dadurch gekennzeichnet, dass**
die Motoren, die Rotorwellen der Motoren und/oder die auf den Rotorwellen der Motoren vorgesehenen Ritzelverzahnungen in Umfangsrichtung der Getriebeeintriebswelle gleichmäßig voneinander beabstandet sind.

8. Getriebemotor nach mindestens einem der vorangegangenen Ansprüche,
**dadurch gekennzeichnet, dass**
ein auf der Rotorwelle eines **jeweiligen** Motors drehfest verbundenes Ritzel nur über die beiden Lager der Rotorwelle gelagert ist.

9. Getriebemotor nach Anspruch 3,
**dadurch gekennzeichnet, dass**
das Zentralrad (62) mit der Getriebeeintriebswelle in einem Gehäuseteil, insbesondere Lagertopf (7), des Getriebes gelagert ist.

10. Getriebemotor nach Anspruch 2,
**dadurch gekennzeichnet, dass**
**das Getriebegehäuseteil ein Lagertopf (7) ist, wobei Adapterflansch (10) und Lagertopf (7) lösbar verbunden sind, insbesondere schraubverbunden sind.**

11. Getriebemotor nach Anspruch 3,
**dadurch gekennzeichnet, dass**
im Lagerschild (1) Kühlkanäle des Statorgehäuses (2) **eines jeweiligen** Motors zusammengeführt sind an einen gemeinsamen Mündungsbereich als Auslass (4, 20),
insbesondere wobei im anderen Lagerschild (1) des **jeweiligen** Motors die Kühlkanäle des Statorgehäuses (2) des Motors zusammengeführt sind zu einem gemeinsamen Mündungsbereich als Einlass (5, 30) für das Kühlmedium.

12. Getriebemotor nach mindestens einem der vorangegangenen Ansprüche,
**dadurch gekennzeichnet, dass**
die Motoren Synchronmotoren sind oder zumindest Permanentmagnete aufweisen.

13. Getriebemotor nach mindestens einem der vorangegangenen Ansprüche,
**dadurch gekennzeichnet, dass**
am Umfang drei, vier, fünf oder sechs Motoren hintereinander angeordnet sind.

## Claims

1. Gear motor comprising electric motors, a gearing and an adapter, which is arranged between the electric motors and the gearing,
wherein the gearing comprises an input shaft (66) and an output shaft (9),
wherein each motor comprises a rotor shaft,
wherein the adapter comprises a casing-forming adapter flange (10),
wherein the adapter flange (10) surrounds, in a manner forming a casing at least in part, a summation gear for bringing together the power flows, generated by the motors, towards the input shaft of the gearing,
wherein oil can flow through each motor as a coolant, i.e. the motors are liquid-cooled, wherein the motors each have an intake (5) and an outlet (20) for the coolant,
wherein conduits (40) are formed on the adapter flange (10), which conduits bring together the coolant emerging from the outlet (20) of each motor towards an outlet (4) on the adapter flange (10),
wherein the input shaft of the gearing is borne in a casing part of the gearing, in particular the bearing housing (7),
wherein the adapter flange (10) comprises a centring means (32), which can be oriented on a centring means (32), in particular a centring collar (21, 31), of the gearing casing part,
wherein receiving openings (42) for receiving the end shields (1, 3) of the electric motors are arranged on the adapter flange (10),
wherein each receptacle comprises a centring means (32), in particular a centring collar (21, 31), on which the end shield (1) of each motor is oriented,
wherein the summation gear is lubricated by coolant in that a connecting conduit (40) leads from the spatial region of the summation gear to a conduit of the adapter flange (10).

2. Gear motor according to claim 1,
**characterised in that**
the casing part is oriented on a further casing part of the gearing by means of a centring collar (21, 31) and connected.

3. Gear motor according to at least one of the preceding claims,
**characterised in that**
the summation gear comprises a sun gear (62), in particular a toothed part, in particular a spur gear, which is arranged on the input shaft of the gearing for conjoint rotation,
teeth being formed on each rotor shaft, or a toothed part, in particular a pinion, that has teeth being connected to each rotor shaft to the rotor shaft for conjoint rotation,
the pinion being engaged with the sun gear (62).

4. Gear motor according to at least one of the preceding claims,
**characterised in that**
the adapter flange (10) forms a casing for the summation gear.

5. Gear motor according to at least one of the preceding claims,
**characterised in that**
the adapter flange (10) is constructed in two parts such that it comprises a plate on which the conduits are formed, in particular are sunk, as recesses, in particular as grooves.

6. Gear motor according to claim 5,
**characterised in that**
the outlet (4, 20) of each motor is tightly connected to an intake (5, 30), formed on the adapter flange (10), for a conduit (40), or is connected to an intake (5, 30) formed by the plate of the adapter flange (10),
the intake (5, 30) in particular being the mouth of a respective conduit.

7. Gear motor according to claim 3,
**characterised in that**
the motors, the rotor shafts of the motors and/or the pinion teeth provided on the rotor shafts of the motors are uniformly spaced apart from one another in the circumferential direction of the gearing input shaft.

8. Gear motor according to at least one of the preceding claims,
**characterised in that**
a pinion connected to the rotor shaft of a particular motor for conjoint rotation is borne solely by the two bearings of the rotor shaft.

9. Gear motor according to claim 3,
**characterised in that**
the sun gear (62), together with the gearing input shaft, is borne in a casing part, in particular a bearing housing (7), of the gearing.

10. Gear motor according to claim 2,
**characterised in that**
the gearing casing part is a bearing housing (7), the adapter flange (10) and the bearing housing (7) being releasably connected, in particular being screw-connected.

11. Gear motor according to claim 3,
**characterised in that**
cooling conduits of the stator casing (2) of each motor are brought together in the end shield (1) at a common mouth region as an outlet (4, 20),
the cooling conduits of the stator casing (2) of the motor in particular being brought together in the other end shield (1) of the particular motor to form a common mouth region as an intake (5, 30) for the coolant.

12. Gear motor according to at least one of the preceding claims,
**characterised in that**
the motors are synchronous motors or at least comprise permanent magnets.

13. Gear motor according to at least one of the preceding claims,
**characterised in that**
three, four, five or six motors are arranged circumferentially one behind the other.

## Revendications

1. Motoréducteur comprenant des moteurs électriques et une transmission, ainsi qu'un adaptateur interposé entre lesdites moteurs électriques et ladite transmission, laquelle transmission est munie d'un arbre d'entrée (66) et d'un arbre de sortie (9),
chaque moteur étant pourvu d'un arbre rotorique,
l'adaptateur étant doté d'une bride (10) formant carter,
laquelle bride (10) de l'adaptateur entoure au moins partiellement, avec formation d'un carter, un engrenage sommateur destiné à faire converger les flux de puissance, engendrés par les moteurs, vers l'arbre d'entrée de la transmission,
les moteurs pouvant être respectivement parcourus par une huile agissant en tant que fluide de refroidissement, en étant par conséquent refroidis par un liquide,
lesdits moteurs étant respectivement munis d'une admission (5), ainsi que d'une sortie (20) dédiées audit fluide de refroidissement,
sachant que des canaux (40) pratiqués au niveau de la bride (10) de l'adaptateur font converger le fluide de refroidissement, sortant au niveau de la sortie respective (20) d'un moteur, vers une sortie (4) ménagée au niveau de ladite bride (10) de l'adaptateur,
l'arbre d'entrée de la transmission étant monté dans une partie de carter de ladite transmission, en particulier dans une cuvette de palier (7),
ladite bride (10) de l'adaptateur étant pourvue d'un moyen de centrage (32) qui peut être aligné sur un moyen de centrage (32), notamment sur un collet de centrage (21, 31) de ladite partie du carter de la transmission,
des ouvertures de réception (42) étant pratiquées au niveau de ladite bride (10) de l'adaptateur, en vue de recevoir les boucliers de paliers (1, 3) des moteurs électriques,
le logement considéré comportant un moyen de centrage (32), en particulier un collet de centrage (21, 31) sur lequel le bouclier de palier (1) d'un moteur respectif est aligné,
sachant que l'engrenage sommateur est lubrifié par du liquide de refroidissement, en ce sens qu'un canal de jonction (40) mène à un canal de la bride (10) de l'adaptateur à partir de la zone de l'espace dudit engrenage sommateur.

2. Motoréducteur selon la revendication 1,
**caractérisé par le fait que**
la partie de carter est reliée à une partie supplémentaire du carter de la transmission, en étant alignée au moyen d'un collet de centrage (21,31).

3. Motoréducteur selon au moins l'une des revendications précédentes,
**caractérisé par le fait que**
l'engrenage sommateur est pourvu d'une roue centrale (62), notamment d'une partie dentée, en particulier d'une roue à denture droite implantée, avec verrouillage rotatif, sur l'arbre d'entrée de la transmission,
sachant qu'une denture est façonnée sur chaque arbre rotorique ou qu'une partie dentée, notamment un pignon à denture, est reliée à chaque arbre rotorique avec verrouillage rotatif,
les pignons étant en prise avec ladite roue centrale (62).

4. Motoréducteur selon au moins l'une des revendications précédentes,
**caractérisé par le fait que**
la bride (10) de l'adaptateur forme un carter dévolu à l'engrenage sommateur.

5. Motoréducteur selon au moins l'une des revendications précédentes,
**caractérisé par le fait que**
la bride (10) de l'adaptateur est composée de deux parties, de sorte qu'elle comporte une tôle dans laquelle les canaux sont pratiqués en tant que renfoncement, notamment en tant que rainure, en particulier par fraisage.

6. Motoréducteur selon la revendication 5,
**caractérisé par le fait que**
la sortie (4, 20) des moteurs est raccordée à chaque fois, de manière étanche, à une admission (5, 30) ménagée au niveau de la bride (10) de l'adaptateur et gagnant un canal (40), respectivement à une admission (5, 30) à laquelle donne naissance la tôle de ladite bride (10) de l'adaptateur,
ladite admission (5, 30) se présentant, en particulier, comme l'embouchure de l'un respectif des canaux.

7. Motoréducteur selon la revendication 3,
**caractérisé par le fait que**
les moteurs, les arbres rotoriques desdits moteurs, et/ou les dentures des pignons prévues sur lesdits arbres rotoriques des moteurs, se trouvent à des espacements mutuels réguliers dans la direction périphérique de l'arbre d'entrée de la transmission.

8. Motoréducteur selon au moins l'une des revendications précédentes,
**caractérisé par le fait**
**qu'**un pignon, relié avec verrouillage rotatif à l'arbre rotorique d'un moteur considéré, est monté uniquement par l'intermédiaire des deux paliers dudit arbre rotorique.

9. Motoréducteur selon la revendication 3,
**caractérisé par le fait que**
la roue centrale (62) est montée avec l'arbre d'entrée de la transmission dans une partie du carter, notamment une cuvette de palier (7) de ladite transmission.

10. Motoréducteur selon la revendication 2,
**caractérisé par le fait que**
la partie du carter de la transmission est une cuvette de palier (7), la bride (10) de l'adaptateur et ladite cuvette de palier (7) étant reliées de manière libérable, notamment reliées par vissage.

11. Motoréducteur selon la revendication 3,
**caractérisé par le fait que**
des canaux de refroidissement du carter statorique (2) d'un moteur considéré sont regroupés dans le bouclier de palier (1), au niveau d'une zone d'embouchure commune matérialisant une sortie (4, 20),
sachant notamment que, dans l'autre bouclier de palier (1) dudit moteur considéré, les canaux de refroidissement du carter statorique (2) dudit moteur sont regroupés en une zone d'embouchure commune matérialisant une admission (5, 30) dédiée au fluide de refroidissement.

12. Motoréducteur selon au moins l'une des revendications précédentes,
**caractérisé par le fait que**
les moteurs sont des moteurs synchrones ou sont, pour le moins, munis d'aimants permanents.

13. Motoréducteur selon au moins l'une des revendications précédentes,
**caractérisé par le fait que**
trois, quatre, cinq ou six moteurs sont disposés les uns derrière les autres à la périphérie.
